Europäisches Patentamt

European Patent Office

Office européen des brevets

(19)

(11) Veröffentlichungsnummer : **0 511 356 B1**

(12) **EUROPÄISCHE PATENTSCHRIFT**

(45) Veröffentlichungstag der Patentschrift :
**15.02.95 Patentblatt 95/07**

(51) Int. Cl.⁶ : **G01B 11/24,** G01B 11/02,
G01B 11/00

(21) Anmeldenummer : **91920273.9**

(22) Anmeldetag : **19.11.91**

(86) Internationale Anmeldenummer :
**PCT/EP91/02181**

(87) Internationale Veröffentlichungsnummer :
**WO 92/08949 29.05.92 Gazette 92/12**

(54) **VERFAHREN ZUM KONTINUIERLICHEN BERÜHRUNGSFREIEN MESSEN VON PROFILEN UND EINRICHTUNG ZUR DURCHFÜHRUNG DES MESSVERFAHRENS.**

(30) Priorität : **20.11.90 DE 4037383**

(43) Veröffentlichungstag der Anmeldung :
**04.11.92 Patentblatt 92/45**

(45) Bekanntmachung des Hinweises auf die
Patenterteilung :
**15.02.95 Patentblatt 95/07**

(84) Benannte Vertragsstaaten :
**BE DE FR GB**

(56) Entgegenhaltungen :
**EP-A- 0 039 143**
**EP-A- 0 094 463**
**EP-A- 0 244 163**

(56) Entgegenhaltungen :
**Patent Abstracts of Japan, vol. 6, no. 248
(P-160)(1126), 7. Dezember 1982 & JP-
A-57144404
Patent Abstracts of Japan, vol. 9, no. 72
(P-345)(1795), 2. April 1985 & JP-A-59203904
Patent Abstracts of Japan, vol. 11, no. 15
(P-536)(2462), 16. Januar 1987 & JP-
A-61191904**

(73) Patentinhaber : **Mesacon Gesellschaft für
Messtechnik mbH
Martin-Schmeisser-Weg 15
D-44227 Dortmund (DE)**

(72) Erfinder : **WIENECKE, Siegfried
Kleyer Weg 91d
D-4600 Dortmund 1 (DE)**

(74) Vertreter : **Patentanwälte Wenzel & Kalkoff
Ruhrstrasse 26
Postfach 2448
D-58414 Witten (DE)**

**Beschreibung**

Die Erfindung betrifft ein Verfahren zum kontinuierlichen berührungsfreien Messen von Profilen, insbesondere von sich in axialer Richtung bewegenden Profilen, sowie eine Einrichtung zur Durchführung eines Meßverfahrens für Profile.

Bei der Herstellung von gewalzten, gezogenen oder extrudierten Profilen beispielsweise aus Stahl, Aluminium oder Kunststoff ist es wichtig, Informationen über die Kontur bzw. den Querschnitt des Profils möglichst noch während des Produktionsprozesses zu erhalten. Die Informationen werden zur Überwachung der Einhaltung der Toleranzen ebenso gebraucht wie für eine lückenlose Dokumentation der Fertigungsergebnisse. Dieser Bedarf hat zur Entwicklung und Einführung von Verfahren und Einrichtungen zum kontinuierlichen Messen bzw. Vermessen von Profilen im On-Line-Betrieb geführt. Die Kontrolle und Vermessung der Profile hat unmittelbaren Einfluß auf die Fertigung, weil die Möglichkeit besteht, auf etwaige unerwünschte Dimensions- oder Profilabweichungen rasch reagieren zu können.

Die bisher bekannten Verfahren und Einrichtungen zum Messen bzw. Vermessen von Profilen beruhen entweder auf dem Abschattungsprinzip oder folgen dem Lichtschnittverfahren.

Bei dem Abschattungssystem durchquert das Profil einen Lichtvorhang parallel abgelenkter Lichtstrahlen insbesondere Laserlichtstrahlen. Die Zeit, die verstreicht, während derer die Strahlen durch das Profil abgedeckt werden, wird gemessen. Dieser Wert spiegelt jedoch nur den äußeren Profilquerschnitt wider. Im Regelfall reicht es nicht aus, in einer Winkellage des Querschnitts den Abstand der am weitesten entfernten Materialpunkte zu vermessen. Rundmaterial kann z.B. durch Unrundheit in einer Richtung die Toleranzanforderungen erfüllen, um 90° dazu versetzt jedoch außerhalb des Toleranzbereichs liegen.

Es ist auch bekannt, durch Rotation oder Oszillation des Meßgerätes eine vollständige Rundumabtastung des Profils vorzunehmen. Hierbei ergeben sich jedoch Schwierigkeiten. Zum einen kann die Rotation oder Oszillation nur mit bregenzter Frequenz durchgeführt werden. Bei einem bekannten System dieser Art liegt die Rotations geschwindigkeit beispielsweise zwischen 60 und 200 U/min. Zum anderen stellt dieses System hohe Anforderungen an die Meßgeräte sowie an die Zuführungssysteme für Medien wie Wasser und Luft und schließlich an die Signal- und Spannungsquellen- bzw. Leitungssysteme.

Aus der EP-A-0039143 ist ein Meßverfahren nach dem Abschattungsprinzip bekannt, bei dem auf einem Schlitten eine Abtasteinheit entlang des zu messenden Körpers bewegt wird. Die Abtasteinheit weist mehrere um den Körper angeordnete Laser auf. Der von den Lasern jeweils ausgesendete Meßstrahl wird durch eine optische Einheit derart abgelenkt, daß der Körper in einer senkrecht zur Bewegungsrichtung der Abtasteinheit angeordneten Ebene linienförmig von dem Meßstrahl erfaßt wird. Teilkreisförmige, im Strahlengang der Meßstrahlen hinter dem Körper positionierte Detektoren tasten die Meßstrahlen ab, wobei infolge der Abschattung des Körpers die Bestimmung der Form des Körpers bzw. des Durchmessers eines Rundprofils ermöglicht wird. Nachteilig an diesem Verfahren ist, daß kein konkaver Oberflächenverlauf detektiert werden kann. Ebenso können verdeckte Kanten, wie sie beim Winkel-, T- oder Doppel-T-Profil auftreten, mit diesem Meßverfahren nicht gemessen werden.

Ferner ist aus der JP-A-59203904 ein berührungsfreies Meßverfahren zur Bestimmung der Form eines Körpers bekannt, das nach dem Abschattungsprinzip arbeitet. Bei dieser Anordnung sind Sonden, die jeweils aus einem lichtemittierenden Laser sowie einem rotierenden Spiegel auf der einen Seite des Körpers und einem Detektor auf der anderen Seite des Körpers bestehen, sternförmig um den Körper positioniert. Auch dieses Meßverfahren ist lediglich dazu geeignet, den Profilquerschnitt des Körpers zu bestimmen. Ein konkaver Oberflächenverlauf kann nicht abgetastet werden.

Bei dem Lichtschnittverfahren wird ein Laserstrahl entweder über eine Zylinderlinse aufgeweitet oder mittels eines Resonanzspiegels abgelenkt und erzeugt auf diese Weise ein Lichtband auf der Oberfläche. Die Beleuchtungsrichtung und Abbildungsrichtung bilden dabei ein festes Winkelverhältnis. Deshalb gestattet das Lichtschnittverfahren ein Abstandsmeßverfahren, bei dem eine Vielzahl von Punkten gleichzeitig auf das zu vermessende Profil gebracht werden. Als Detektoren werden flächenhafte Empfänger eingesetzt. Die mit vertretbarem Aufwand einsetzbaren CCD-Arrays besitzen jedoch nur eine geringe Pixelzahl von ca. 512 x 512 Punkten. Damit wird jedoch bei vorgegebener ausreichender Auflösung der zur Verfügung stehende Meßbereich eingeengt. Nachteilig ist ferner, daß aufwendige und zeitraubende Algorithmen für die Auswertung der CCD-Arrays notwendig sind. Hierbei handelt es sich um spezielle Algorithmen für die Meßdatenselektion oder um die Verwendung zweidimensionaler, statistischer Operationen.

Ein solches Lichtschnittverfahren kommt in der JP-A-57144404 zur Anwendung. Der zu vermessende Körper wird von mehreren Seiten durch eine Lichtquelle bestrahlt, wobei die reflektierten Lichtstrahlen von mehreren Fernsehkameras aufgenommen werden. Die als Detektoren arbeitenden Kameras sind ober- und unterhalb sowie neben dem Körper in einer Ebene positioniert. Zwar werden hier die reflektierten Meßstrahlen ausgewertet, jedoch bilden die reflektierten Meßstrahlen einen Lichtstrich, der parallel abgestastet wird. Hierdurch ergibt sich bei der Auswertung der Informationen ein relativ hoher Geräteaufwand. Weiterhin wirkt sich nachteilig die relativ hohe Belichtungszeit und die geringe Auflösung der Einrichtung aus.

Es besteht daher die Aufgabe, ein Verfahren zum Messen von Profilen zu schaffen, mit dem auch innere Konturen eines Profils, die für einen Meßstrahl erreichbar sind und eine Reflektion auf den Empfänger zulassen, ausgemessen werden können. Das Verfahren soll darüber hinaus möglichst eine hohe Meßgeschwindigkeit und Meßgenauigkeit zulassen. Es soll den Einsatz von zuverlässigen Meßeinrichtungen erlauben, die relativ unempfindlich gegen äußere Einflüsse sind oder zumindest mit geringem Aufwand gegenüber störenden bzw. schädlichen Einflüssen unempfindlich zu machen bzw. zu schützen sind.

Diese Aufgabe wird erfindungsgemäß dadurch gelöst, daß Sonden, mit denen nach dem Triangulationsprinzip mittels eines Laserlicht-Meßstrahls ein Oberflächensegment eines Objektes in einem bestimmten Meßbereich der jeweiligen Sonde sequentiell bzw. punktweise nacheinander sowie mit variabler und voreinstellbarer Schrittweite bzw. Auflösung innerhalb des Meßbereichs kontinuierlich abgetastet wird und mit dem von der Objektoberfläche reflektierten und von einem feststehenden Empfänger aufgenommenen Strahl aufgrund der geometrischen Beziehungen der Abstand jedes Meßpunktes zur Sonde in Form lokaler Meßdaten bestimmt wird, in einer Halterung rings um das Profil sowie im Abstand von diesem und derart in vorbestimmten Winkellagen zueinander angeordnet werden, daß dem Meßbereich jeder Sonde als Oberflächensegment ein Konturensegment des Profils zugeordnet wird, wobei sich die Meßbereiche benachbarter Sonden überlappen und die zu messende Gesamtkontur des Profils durch die Meßbereiche erfaßt wird, und daß eine Systemkalibrierung mit einem konturen- und maßgenauen Referenzwerkstück durch Ermittlung der Sondenpositionen (drei Koordinaten, zwei Abstrahlwinkel) in einem Referenzkoordinatensystem vorgenommen wird und daß mit den Daten der Systemkalibrierung, den vorgegebenen Solldaten des Profils und den lokalen Meßdaten, die sich als Schnittpunkt des Meßstrahls mit dem Objekt ergeben, sowie mit einer Lageberechnung für das zu messende Profil und über Koordinatentransformationen die Konturensegmente in ein globales Koordinatensystem übertragen und zu einem Bild zusammengefügt werden.

Im Gegensatz zu dem bekannten Stand der Technik liegt der Erfindung folglich der Gedanke zugrunde, die Kontur eines Profils, das ohne weiteres auch in einem oder mehreren Bereichen einen konkaven Oberflächenverlauf haben oder auch wie die vorgenannten Winkel-, T- oder Doppel-T-Profile verdeckte Kanten haben kann, nacheinander punktweise so abzutasten, daß von jedem Meßpunkt eine genaue Abstandsinformation zu einer festen Bezugsebene in Form von Signalen bzw. in Form von lokalen Meßdaten erhalten wird, die sich in geeigneter Weise, wie noch dargestellt wird, weiterverarbeiten lassen, um den gewünschten Aufschluß über die Profilkontur zu gewinnen.

Die erfindungsgemäße Anordnung von nach dem Triangulationsprinzip arbeitenden Sonden derart, daß sich die Meßbereiche benachbarter Sonden überlappen, ermöglicht eine Verknüpfung der von den Sonden erhaltenen lokalen Meßdaten zur Zusammenfügung und Darstellung der Gesamtkontur.

Das im Rahmen der Erfindung verwendete und für Oberflächenmessungen bereits bekannte Triangulationsverfahren wird im zweiten Teil der Beschreibung anhand von Abbildungen in seinen Grundzügen erläutert.

Zur Abgrenzung gegenüber dem Lichtschnittverfahren sei darauf hingewiesen, daß bei dem bekannten Lichtschnittverfahren keine sequentielle bzw. punktweise nacheinander vorgenommene Abstandsmessung erfolgt sondern statt dessen gleichzeitig praktisch eine Punktemenge in Form eines Lichtstrichs auf das Profil aufgebracht und die Reflektion detektiert wird, so daß für die Detektion notwendigerweise ein zweidimensionaler Empfänger benötigt wird. Abgesehen von den bereits erwähnten komplexen Algorithmen für die Auswertung der zweidimensionalen Bildinformation ist auch eine wesentlich längere Belichtungszeit für das Empfänger-Array nötig als z.B. für die positionsempfindliche Diode oder die CCD-Zeile wie bei der Erfindung. Der Unterschied liegt hier ungefähr bei einem Faktor 10 für die Belichtungszeit.

Nachstehend werden eine Reihe von Vorteilen erläutert, die mit dem erfindungsgemäßen Verfahren erreicht werden:

Zunächst sei noch einmal darauf hingewiesen, daß der Einsatz von Triangulationssonden ermöglicht, auch innenliegende, nämlich z.B. konkave Konturen in der Oberfläche des Profils, aber auch verdeckte Kanten wie bei Doppel-T-Trägern oder U-Profilen detektieren zu können.

Sehr wesentlich ist ein weiterer Vorteil, wonach der einstellbare Abtastbereich dem zu vermessenden Profil angepaßt werden kann, so daß für Profile mit unterschiedlichen Abmessungen keineswegs immer der vollständige Meßbereich der jeweiligen Meßeinrichtung durchlaufen werden muß. Hierdurch erreicht man eine Steuerung bzw. Beeinflussung der Abtastgeschwindigkeit. Des weiteren stehen in kurzen Zeitintervallen von beispielsweise 2 ms bei im Handel erhältlichen Sonden, bei denen diese Zeitintervalle durch die Positionierzeit des Spiegels und durch die Belichtungszeit des Empfängers bestimmt sind, Meßdaten für die Lageberechnung und für die Berechnung der spezifischen Profilgeometrie zur Verfügung.

Ein weiterer sehr wesentlicher Vorteil des erfindungsgemäßen Verfahrens besteht darin, daß die Positionierung jedes Lichtpunktes individuell gewählt bzw. über die Ansteuerung des die schrittweise Abtastung bewirkenden Spiegelsystems vorgegeben werden kann. Auf diese Weise ist es möglich, die Punktdichte in interessanten und kritischen Bereichen maximal zu wählen, also ein maxiales Auflösungsvermögen zu erreichen, und in Bereichen mit untergeordneter Aussagekraft geringer einzustellen. Das maximale Auflösungsvermögen richtet sich nach kleinsten einstellbaren Quantisierstufen des Spiegelscanners, die durch die kleinste Schrittweite bestimmt ist. Der gesamte Abtastbereich ist bei einer im Handel erhältlichen Sonde beispielsweise in 2048 Schritte aufgeteilt. Die Positionierung läßt sich aber so einstellen, daß entweder jeder diskrete Winkelschritt angesteuert wird, also jeder nur mögliche Meßpunkt benutzt und dessen Abstand gemessen wird oder daß mit einer beliebig vorgewählten Schrittweite der der jeweiligen Sonde zugeordnete Meßbereich durchfahren bzw. das zugeordnete Konturensegment des Profils abgetastet wird oder daß die Schrittweite einem festlegbaren Anforderungsmuster folgend, das von der jeweiligen Bedeutung der einzelnen Bereiche, aus denen das Konturensegment zusammengesetzt ist, ausgeht, individuell angepaßt wird. Durch diese Variation der Auflösung bzw. der gezielten Punktdichte werden unnötige Punkte und damit unnötige Zeitverluste sowie überflüssige Meßdatenverarbeitungen vermieden.

Hieraus ergibt sich bereits ein ebenfalls sehr wesentlicher Vorteil, wonach nämlich durch die Variation der Auflösung höhere Meßgeschwindigkeiten bzw. Meßfrequenzen erzielt werden.

Der sehr wesentliche Vorteil einer vergleichsweise kürzeren Belichtungszeit ist bereits erwähnt worden. In Verbindung mit der Positionierzeit für die Spiegelauslenkung, die ca. 1 ms beträgt, kann bereits nach ca. 2 ms mit der Datenauswertung, nämlich der Datenselektierung und mit der Koordinatentransformation begonnen werden, und es liegen zu diesem Zeitpunkt bereits erste Werte über die Kontur vor.

Erfindungsgemäß wird jeder Sonde ein bestimmtes Konturensegment des Profils zugeordnet. Die Anordnung der Triangulationssonden um das zu vermessende Profil richtet sich nach den zulässigen Reflektionswinkeln, den Materialgeometrien und der Oberflächenbeschaffenheit des zu prüfenden Profils. Wie später aus einer entsprechenden Darstellung hervorgeht, liegt z.B. der zulässige Reflektionswinkel bei dem Vermessen eines Rundprofils je nach Materialbeschaffenheit bei maximal etwa 45°.

Die bei den einzelnen Sonden anfallenden lokalen Meßdaten, also die Abstandswerte, werden über Koordinatentransformationen und spezielle Algorithmen für die Lageberechnung in das Referenzkoordinatensystem transformiert und so zu einem Gesamtbild zusammengefügt.

Als weiterer Vorteil des erfindungsgemäßen Verfahrens ist die Möglichkeit der einfachen Auswertung der CCD-Zeileninformation zu nennen. Die Adresse des belichteten CCD-Pixels gibt den Abstandswert wieder. Diesem Zählerstand wird dabei ein binärer Zahlenwert zugeordnet, der mit dem Auflösungsfaktor multipliziert einen Abstandswert in Polarkoordinaten angibt. Um den tatsächlichen Abstand des Konturensegments zur Sondenbezugskante zu erhalten, muß dieser Abstandswert des Bildsensors von Polarkoordinaten in kartesische Koordinaten transformiert werden. Diese Transformation geschieht nach folgender Umrechnungsformel:

$$x_u = l \times \sin \alpha$$
$$z_u = l \times \cos \alpha$$

Dabei ist l der Basisabstand, und der Winkel $\alpha$ entspricht der Winkelauslenkung des Spiegelantriebssystems. Diese lokalen Meßdaten werden anschließend mit Hilfe der Rekonstruktions- und Lagebestimmungsprogramme in das Referenzkoordinatensystem transformiert.

Die Meßstrahlen der Sonden müssen nicht notwendigerweise in einer gemeinsamen Meßebene quer zu dem zu messenden Profil liegen. Eine erfindungsgemäße Weiterbildung des Verfahrens besteht vielmehr darin, daß die Meßstrahlen der Sonden in in Achsrichtung des Profils parallel versetzten Ebenen auf das Profil gerichtet und reflektiert werden. Dabei befinden sich die Ebenen, in denen die Meßstrahlen liegen, in festem Abstand zueinander. Das Messen in verschiedenen Ebenen schließt eine gegenseitige Beeinflussung der Meßergebnisse vor allem benachbarter Sonden, die einen Überlappungsbereich aufweisen, aus.

Insbesondere für Rundprofile und andere Profile mit relativ gleichmäßigem Konturenverlauf längs des Umfangs ist es vorteilhaft, wenn die Sonden mit gleichem Winkelabstand symmetrisch um das Profil angeordnet werden.

Wenn das Profil zum Ausweichen aus dem Meßfeld neigt, ist es zweckmäßig, daß das Profil insbesondere vor, ggfs. aber auch hinter der Meßebene zwangsgeführt wird. Bei Profilen mit relativ starken Seitwärtsbewegungen im Bereich des Meßfeldes kann zwar auch Abhilfe geschaffen werden durch eine entsprechende Meßfeldvergrößerung, aber mit dieser Maßnahme sind entsprechend höhere Kosten verbunden, so daß eine Zwangsführung ein wesentlich einfacheres Mittel darstellt.

Für die Auswertung und Verknüpfung der lokalen Meßdaten ist erfindungsgemäß vorgesehen, daß die Auswertung der lokalen Meßdaten mit einer Hardware, die Link-Adapter, Transputereinheiten und eine Transputer-Graphik umfaßt, in Parallelrechentechnik erfolgt, wobei die verwendeten Softwaremodule eine Profilbeschreibungsdatei, ein Referenzlagemodul sowie Kalibriermodule und Scannerdaten umfassen.

Einen sehr wesentlichen Teil der Erfindung bildet eine Einrichtung zum Messen von Profilen, die sich insbesondere zur Durchführung des vorgenannten Verfahrens eignet. Erfindungsgemäß sind hierfür in einer Meßeinrichtung mehrere Sonden sternförmig sowie mit vorgewählter Winkellage zueinander um eine Meßkammer angeordnet, und ihre Meßstrahlen sind im wesentlichen nach innen auf die Meßkammer richtbar, durch die das zu messende Profil axial hindurchbewegbar ist. Die Anzahl der anzuordnenden Sonden richtet sich danach, in wieviel Konturensegmente die Gesamtkontur des zu messenden Profils aufgeteilt werden muß. Die Meßstrahlen der sternförmig angeordneten Sonden werden radial nach innen auf das zu messende Profil gerichtet, das für die Messung durch die Meßkammer axial hindurchbewegt wird.

Zweckmäßig wird jede Sonde einem eigenen Sondenträger zugeordnet. An diesem ist sie derart einstellbar zu befestigen, daß der Meßstrahl sowie der reflektierte Strahl die Gewinnung der notwendigen lokalen Meßdaten von dem der Sonde zugeordneten Konturensegment des Profils zuläßt. Jeder Sondenträger wird an der innenliegenden Meßkammer befestigt.

Eine Weiterbildung der Erfindung ist gekennzeichnet durch abnehmbare Hauben, die mit bzw. an den Sondenträgern im wesentlichen geschlossene Sondenkammern bilden. Die Sondenkammern bieten Schutz für die Sonden gegen Beschädigung, sie geben aber auch die Möglichkeit zur Klimatisierung der Umgebungsatmosphäre der Sonden. Die Hauben sind, ggfs. in geteilter Ausführung, abnehmbar, um einen leichten Zugang zu den Sonden zu erhalten.

Erfindungsgemäß ist weiterhin vorgesehen, daß die Meßkammer gegenüber den Sondenträgern durch eine ringsum laufende Wandung mit Meßfenstern abgeteilt ist. Die Meßfenster gewährleisten den notwendigen Schutz der Sonden gegen thermische und mechanische Beanspruchungen sowie gegen Verschmutzung aus dem Bereich der Meßkammer. Darüber hinaus gewährleisten die Meßfenster bei sonst ringsum geschlossener Sondenkammer den freien Durchtritt für den Strahlengang.

Die Meßkammer ist erfindungsgemäß zur Bildung eines Ringkanals zum Hindurchführen strömungsfähiger Medien wie insbesondere Kühlwasser doppelwandig ausgeführt.

Auch diese Maßnahme dient zum Schutz der Sonden durch Konstanthaltung der Temperatur im Wandungsbereich.

Erfindungsgemäß ist vorgesehen, daß unterhalb bzw. neben der Meßkammer zwischen zwei Sondenträgern eine Wasserkammer mit Anschlüssen angeordnet ist, von der aus dem Ringkanal der Meßkammer Kühlwasser im Kreislauf zugeführt wird. Diese Anordnung läßt eine Integration der für den Kühlwasserkreislauf notwendigen Bau- und Anschlußteile in die Gesamteinrichtung zu.

Entweder statt des vorgenannten Kühlsystems in einem Ringkanal, der durch doppelwandige Ausbildung der Meßkammer gebildet ist, oder aber als Zusatzmaßnahme ist erfindungsgemäß weiterhin vorgesehen, daß ein Ringeinsatz, der aus zwei im Meßbereich durch außerhalb der Meßstrahlen verlaufende Verbindungsrohre miteinander verbundenen Ringkammern zur Hindurchführung strömungsfähiger Medien wie Kühlwasser gebildet ist, im wesentlichen koaxial in die Meßkammer einführbar und dort befestigbar sowie mit Anschlüssen für die Zu- und Abführung eines Strömungsmediums wie Kühlwasser versehen ist. Zur Freihaltung des eigentlichen Meßbereichs der Meßkammer ist der Ringeinsatz folglich vorzugsweise mittig unterbrochen bzw. in zwei Ringkammern unterteilt, die über außerhalb der Meß- und Reflektionsstrahlen liegende Verbindungsrohre miteinander verbunden sind.

Schließlich ist erfindungsgemäß auch vorgesehen, daß die Sondenkammern an ein Belüftungssystem zur Klimatisierung bzw. Konstanthaltung der Umgebungstemperatur der Sonden anschließbar sind, mit welchem Belüftungssystem den Sondenkammern klimatisierte bzw. in vorgegebener Weise temperierte Luft zugeführt werden kann.

Für dieses Belüftungssystem ist erfindungsgemäß ein Gehäuse an die Einrichtung ansetzbar, das mit der die Meßkammer auf einer Stirnseite abschließenden bzw. umgebenden Stirnwand einen ringförmigen Luftkanal bildet, der über Einlaßöffnungen mit den Sondenkammern verbunden ist.

Vorteilhafterweise ist auf der dem Belüftungssystem abgewandten Seite der Einrichtung eine Abdeckung befestigbar, in die beispielsweise auch eine Zwangsführung für das Profil einsetzbar ist.

Für den Gesamtaufbau der Einrichtung ist erfindungsgemäß vorgesehen, daß die sternförmige Anordnung der Sondenträger aus zwei im Abstand voneinander angeordneten und im wesentlichen einen nabenförmigen Mittelteil und hiervon sternförmig ausgehende Arme umfassenden Platten gebildet ist, die mindestens mittig durch axiale Stege bzw. durch die Meßkammerwände zu einer starren Konstruktion miteinander verbunden sind. Dieser Aufbau der Meßeinrichtung geht im einzelnen aus den nachfolgenden Erläuterungen der Zeichnungen hervor.

Ausführungsbeispiele der Erfindung werden nachfolgend mit Bezug auf die Zeichnung näher erläutert. Soweit das erfindungsgemäße Verfahren betroffen ist, wird ein Ausführungsbeispiel hierfür ebenfalls anhand der Darstellungen in der Zeichnung beschrieben.

In der Zeichnung zeigen:

Figur 1 eine Skizze zur Veranschaulichung des Triangulationsprinzips, das bei dem erfindungsgemäßen Verfahren verwendet wird;

Figur 2 eine schematische Darstellung des Prinzips der Arbeitsweise der im Rahmen des erfindungsgemäßen Verfahrens verwendeten Sonden;

Figur 3 eine schematische Darstellung einer prinzipiellen Anordnung von fünf Sonden zur Messung eines Rundprofils;

Figur 4 eine Darstellung des Meßbereichs bzw. des Meßfeldes einer Sonde und der geometrischen Beziehungen am Beispiel eines Rundprofils;

Figur 5 eine schematische Darstellung von fünf Sonden zur Messung von zwei verschiedenen Rundprofilen;

Figur 6 eine rein schematische Darstellung der drei bei der Durchführung des erfindungsgemäßen Verfahrens verwendeten Einheiten Mechanik, Hardware, Softwaremodule;

Figur 7 eine schematische Darstellung des Prinzips einer Netzwerktopologie als Blockschaltbild;

Figur 8 eine ebenfalls schematische Darstellung der im Rahmen des erfindungsgemäßen Verfahrens verwendeten Softwaremodule für die Profilvermessung als Blockschaltbild;

Figur 9 eine schematische Darstellung einer Meßeinrichtung in Vorderansicht mit einer Anordnung aus fünf Sonden ähnlich wie in Figur 3 und 5;

Figur 10 eine Vorderansicht der Meßeinrichtung, ähnlich wie in Figur 9, jedoch zur Darstellung von Einzelheiten, teilweise im Schnitt;

Figur 11 eine Rückansicht der Meßeinrichtung von Figur 10;

Figur 12 eine Draufsicht der Meßeinrichtung nach Figur 10, 11;

Figur 13 eine Seitenansicht der Meßeinrichtung von Figur 10 bis 12 als Vertikalschnitt;

Figur 14 eine Darstellung eines in die Meßeinrichtung integrierbaren Ringeinsatzes als Längsschnittdarstellung;

Figur 15 eine Schnittdarstellung des Ringeinsatzes von Figur 14 entlang der Schnittlinie A-A von Figur 14;

Figur 16 eine weitere Querschnittsansicht des Ringeinsatzes von Figur 14, 15;

Figur 17 eine Vorderansicht einer an die Meßeinrichtung anschließbaren Abdeckhaube;

Figur 18 eine Draufsicht der Abdeckhaube von Figur 17;

Figur 19 eine Seitenansicht der Abdeckhaube von Figur 17 und 18, teilweise als Längsschnittdarstellung;

Figur 20 eine Vorderansicht eines an die Meßeinrichtung ansetzbaren Gehäuses zur Belüftung der Sondenkammern;

Figur 21 eine Seitenansicht des Gehäuses von Figur 20 als Vertikalschnitt entlang der Linie A-A von Figur 20;

Figur 22 eine weitere Darstellung des Gehäuses von Figur 20 im Schnitt entlang der Linie B-B von Figur 20;

Figur 23 ebenfalls eine Darstellung des Gehäuses von Figur 20 entlang der Schnittlinie C-C von Figur 20.

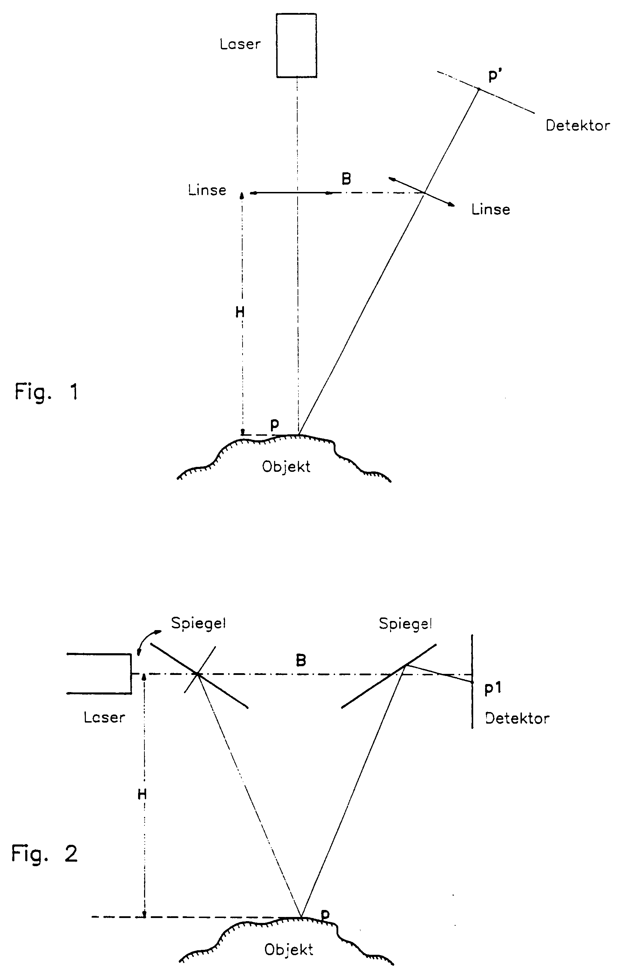

In Figur 1 ist rein schematisch die bei Anwendung des Triangulationsverfahrens benutzte Anordnung aus Laser, Linse, Objekt sowie Detektor mit vorgeschalteter Linse dargestellt. Ein Lichtstrahl markiert auf dem Objekt, das bei der Profilmessung einem Konturensegment entspricht, einen Punkt P, der durch die Empfangsoptik auf einen Detektor, beispielsweise eine positionsempfindliche Diode oder eine CCD-Zeile, abgebildet wird. Der Vorteil bei Verwendung von CCD-Zeilen ist der absolut feste Maßstab, da der Pixel-Abstand fest vorgegeben ist. Auflösung und Genauigkeit sind hierdurch bestimmt und betragen +/- 1 Pixel. Durch die Neigung der Abbildungsrichtung gegenüber der Beleuchtungsrichtung wird erreicht, daß sich der Abstand H des Abtastpunktes in eine definierte Punktbildposition auf dem Detektor umsetzt. Aus der Schwerpunktposition des Lichtflecks auf der Empfängereinheit und den geometrischen Daten der Anordnung errechnet sich damit der Abstand H. Durch die spezielle Anordnung, wie sie in Figur 1 verdeutlicht ist, wird die Scheimpflugbedingung zur Tiefenschärfeerweiterung erfüllt.

Für die zweidimensionale Abtastung, wie sie bei dem erfindungsgemäßen Verfahren Verwendung findet, wird gemäß Figur 2 der von der Sonde bzw. von dem Laser kommende Strahl durch gesteuertes Umlenken über das Objekt bzw. über das Konturensegment des Profils geführt. Die Umlenkung des Lichtstrahls erfolgt über steuerbare Spiegel (Galvanometerscanner), wie in Figur 2 schematisch dargestellt ist, oder mit Hilfe von akustooptischen Modulatoren. Mit Einsatz z.B. eines Galvanometerscanners ist es möglich, den Lichtpunkt gezielt auf spezifische Oberflächenpunkte zu positionieren. Die steuerbaren Spiegel sind, fest gekoppelt, in den Beleuchtungs- und den Abbildungsstrahlengang eingebracht. Mit der im Prinzip dargestellten optischen Anordnung läßt sich eine sequentielle Abtastung der Profil- bzw. Objektkontur in einem bestimmten Segment durchführen, wie bereits vorhergehend im einzelnen erläutert worden ist.

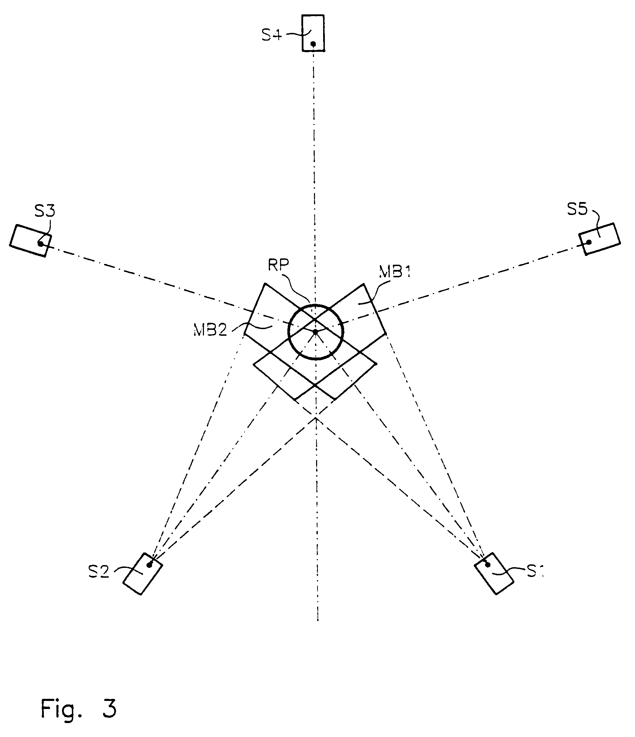

In Figur 3 ist eine prinzipielle Anordnung von 5 Triangulationsscannern bzw. Sonden S1, S2, S3, S4 und S5 dargestellt, die in einem 72°-Raster um ein zu messendes Profil RP angeordnet sind. Jede der Sonden weist einen Meßbereich auf, der für die Sonden S1 bzw. S2 jeweils eingezeichnet und mit MB1 bzw. MB2 bezeichnet ist. Die Sonden S1 und S2 sind gegenüber dem Rundprofil RP so positioniert, daß sie bestimmte Oberflächen- bzw. Konturensegmente abtasten, die innerhalb des Bereichs MB1 bzw. MB2 liegen. Die beiden Meßbereiche MB1 und MB2 zeigen eine breite Überlappung, die Voraussetzung für die Auswertung der lokalen Meßdaten zum Zusammenfügen des Gesamtbildes der Kontur des Profils erforderlich ist. Der jeweils wirksame Meßbereich der beiden Meßbereiche MB1 und MB2 ist wegen der Notwendigkeit der Überlappung etwas kleiner als der an sich zur Verfügung stehende Meßbereich jeder einzelnen Sonde S1 bzw. S2.

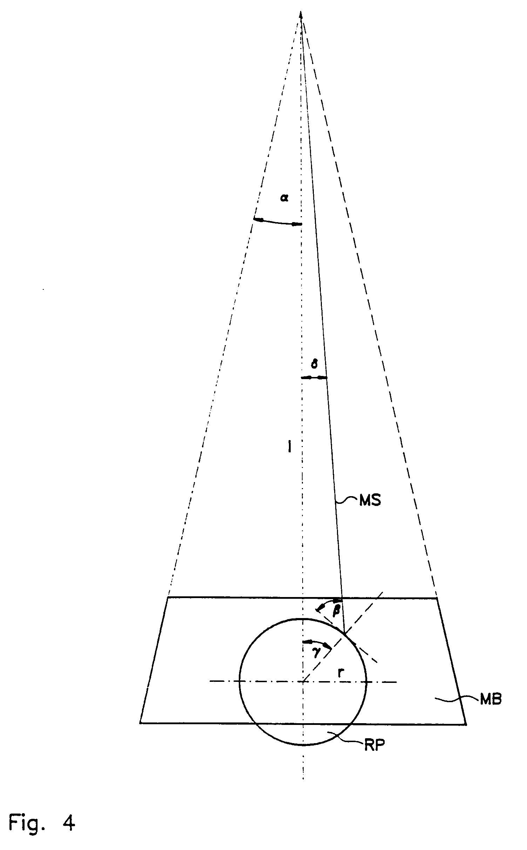

In Figur 4 sind die geometrischen Beziehungen gezeigt, die sich zwischen dem Meßstrahl MS einer nicht dargestellten Sonde und der zu messenden Oberfläche des Rundprofils RP ergeben. Das der Sonde bzw. dem Meßstrahl MS zugeordnete Konturensegment des Rundprofils RP liegt im Meßbereich MB. Das eingezeichnete Rundprofil RP soll einen angenommenen Durchmesser von 30 mm haben. Der Meßstrahl MS trifft für einen Reflektionswinkel von + 45° auf das Konturensegment auf. Der Reflektionswinkel wird zwischen der eingezeichneten Tangente an den Kreis bzw. die Segmentkontur im Auftreffpunkt und dem Meßstrahl MS genommen. Der Winkel $\gamma$ berechnet sich zu:

$$\frac{\sin\alpha}{\sin(90° + 3)} = \frac{r}{l}$$

$$\alpha = \arcsin \cdot \frac{(r \cdot \sin 135°)}{l}$$

$$\gamma = 180° - \alpha - (90° + \beta)$$

$$\gamma = 41,2°$$

für

$$r = 15 \text{ mm}$$
$$l = 160 \text{ mm}$$

Damit wird durch eine Sonde ein Konturensegment von 82,4° von der Gesamtkontur des Rundprofils RP abgedeckt.

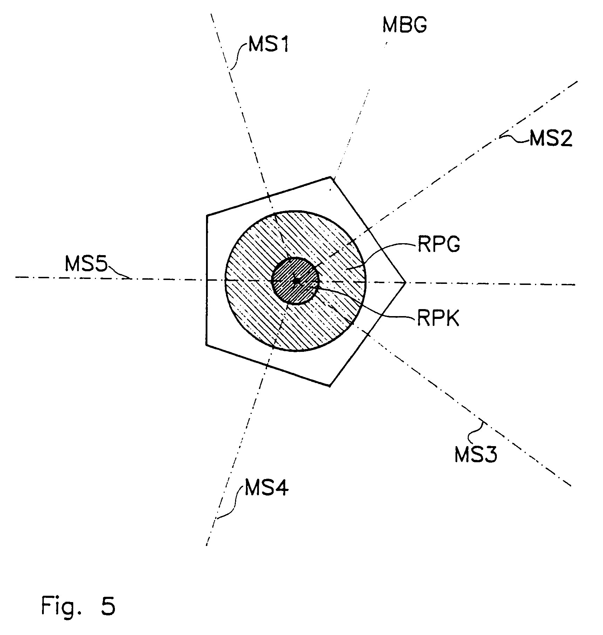

Aus der Darstellung in Figur 5 geht hervor, wie mit einer Anordnung aus 5 äquiangular angeordneten (aber nicht dargestellten) Sonden mit entsprechenden Meßstrahlen MS1, MS2, MS3, MS4 und MS5 ein Gesamtmeßbereich MBG, der sich aus den nicht dargestellten Einzelmeßbereichen mit entsprechender Überlappung ergibt, gebildet wird. In diesem Meßbereich MBG können beispielsweise Rundprofile verschiedener Durchmesser gemessen werden. Wenn statt des größeren Rundprofils RPG das kleinere Rundprofil RPK, nämlich mit entsprechend kleinerem Durchmesser versehen, gemessen wird, ergibt sich nach dem erfindungsgemäßen Verfahren automatisch eine höhere Meßfrequenz, weil die Meßstrahlen der einzelnen Sonden das Profil nicht weiter abzutasten suchen, wenn keine Reflektion erfolgt.

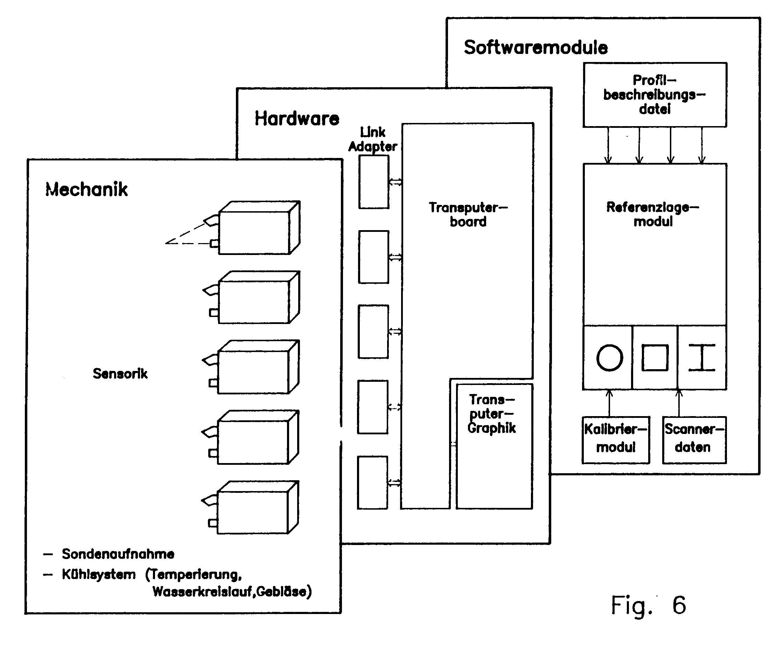

Aus Figur 6 ergibt sich das Gesamtsystem, mit dem das erfindungsgemäße Verfahren durchführbar ist. Der erste Block zeigt als "Mechanik" die Anzahl der verwendeten Sonden. Der "Hardware"-Block umfaßt die Link-Adapter, die die Verbindung zum Transputersystem, dem eigentlichen Transputerboard, herstellen sowie die Transputer-Grafik. Dahinter folgt lediglich zur Veranschaulichung der Block für die "Softwaremodule".

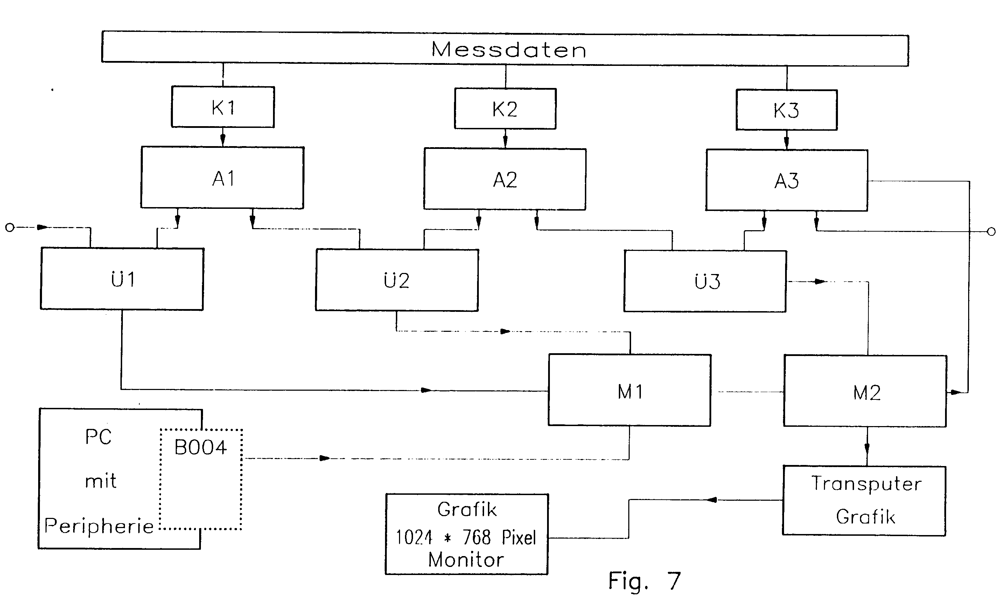

In einem typischen Anwendungsbeispiel mit einem Auflösungsvermögen des Systems von 2/100 mm, einem Meßbereich von 40 x 40 mm und bei einer Meßfrequenz von 0,5 s ergibt sich eine Datenrate von 4000 Wertepaaren pro Sekunde und pro Scanner bzw. Sonde. Damit bietet sich die Parallelrechentechnik für die Datenaufnahme und Verarbeitung an. Des weiteren können Parameter, die aus der Lageberechnung und den Koordinatentransformationen gewonnen werden, an die benachbarten Sektionen, bzw. Transputer, weitergereicht werden. Eine mögliche Hardware-Topologie mit Vorverarbeitungsstufen, Überlappungsstufe und Masterstufe zeigt Figur 7. Die Aufgaben der Koordinatentransformation, der Berechnung der Überlappungsdaten und Ausgleichsberechnungen sowie die Ermittlung der einzelnen Konturzüge und Vergleich mit dem Sollprofil wird auf die einzelnen Stufen verteilt. Da die Datenübertragungen in einem Transputer unabhängig von der CPU ablaufen, können die Arbeitsschritte Datenaufnahme, Datenbearbeitung und Datenweiterleitung zur gleichen Zeit ablaufen.

Bei der Profilmessung wird der Profilflächenschwerpunkt ermittelt, um die Kontur in einer festen Referenzlage in das globale Koordinatensystem einzuzeichnen. Die statistischen Funktionen, die ebenfalls mit der Parallelrechentechnik durchgeführt werden, dienen zum einen für gewisse Ausgleichs- und Regressionsrechnungen und zum anderen der genauen Dokumentation der zu vermessenden Profile.

Einen besonderen Vorteil bietet die Möglichkeit, die Hardware äußerst modular aufzubauen. Die Anzahl der zu verwendenden Transputer richtet sich beispielsweise nach den oben aufgeführten Aufgaben, der grafischen Darstellung und der Anzahl der Scanner bzw. Sonden. Ein Richtwert für die Anzahl der benötigten Transputer lautet:

Anzahl der Transputer = 6 + 2 * Anzahl Sonden

In der als Blockschaltbild in Figur 7 dargestellten möglichen Netzwerktopologie werden mehrere Verarbeitungsstufen unterschieden. Die Meßwerte werden von den Scannern bzw. Sonden geliefert, werden über Link-Adaptoren umgesetzt und zu dem jeweiligen zugehörigen Transputer der Verarbeitungsstufe A übertragen. Die Transputer der Stufe A übernehmen die Aufgabe der Ausblendung der Meßwerte links und rechts vom Objekt, d.h. der Meßwerte die nicht von dem zu vermessenden Profil reflektiert werden und die Transformationen der lokalen Koordinaten in das Referenzsystem wie die Datenweiterleitung an die Transputer der Stufe Ü.

Die Arbeitsstufe Ü (Überlappung) übernimmt die Bestimmung und den Ausgleich des Überlappungsbereichs. Sollten die Abweichungen von den jeweiligen benachbarten Scannern bzw. Sonden zu groß sein, wird eine Meldung generiert, die eine Neukalibrierung des Systems einleitet. Jeder Transputer der Stufe Ü erhält einen bestimmten Profilbereich, eine Profillinie, die zusammengesetzt genau das Profil wiedergeben.

Weitere Aufgaben sind die Übertragung der Teilparameter an die Verarbeitungsstufe M und die Übertragung des Linienzuges zur Weitergabe an die Darstellungsstufe.

Die Verarbeitungsstufe M berechnet aus den Teilparametern der einzelnen Linienzüge bestimmte charakteristische Größen, mit deren Hilfe das Profil positioniert und ausgerichtet werden kann. Stimmen Position und Ausrichtung nicht mit der des Sollprofils überein, so werden Korrekturparameter an die Stufe A abgegeben, d.h. die Koordinatentransformation wird durch einen Regelkreis so bearbeitet, daß das Objekt in Lage und Position mit dem Sollprofil übereinstimmt.

Die Transputer der Stufe M übernehmen auch die Ablaufsteuerung. Zur Darstellung des Profils und seiner Abweichungen wird eine Transputergrafikkarte mit einem hoch auflösenden Bildschirm z.B. 1024 x 768 Pixel eingesetzt. Zur Bedienung, Protokollierung und Abspeicherung von charakteristischen Daten dient ein PC. Aufgabe des PC's ist auch die Erfassung des Sollprofils, die Verwaltung der Sollprofile sowie die Übergabe des Sollprofils und der Sollparameter an das Transputernetzwerk.

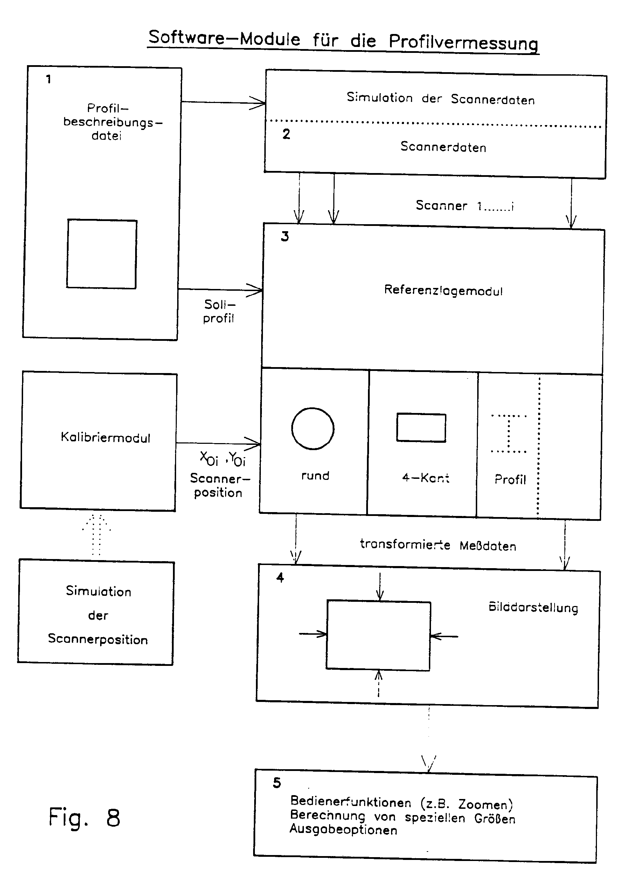

Mit Bezug auf das Blockschaltbild nach Figur 8 für die Software-Module für die Profilvermessung ist anzumerken, daß zunächst ein Kalibrierprogramm notwendig ist. Dieses Programm errechnet mit Hilfe eines Referenzwerkstückes die exakte Position der Sonden im globalen Koordinatensystem. Das Referenzwerkstück besitzt genau gefertigte Abmessungen. Mit den bekannten Abmessungen des Werkstücks und den aufgenommenen Meßdaten werden die kartesischen Koordinaten der Sonden und die Abstrahlrichtungen ermittelt.

Ein weiteres Programm ist das Referenzlagemodul. Dieses Modul ermittelt in Abhängigkeit von den Sondenkoordinaten, den lokalen Meßdaten der einzelnen Sonden und den Angaben für das Sollprofil das Istprofil. Unter Berücksichtigung von möglichen Materialbewegungen wird die Lage des Profils im globalen Koordinatensystem und werden die spezifischen Profilabmessungen berechnet.

Des weiteren existiert eine Profilbeschreibungsdatei, in der die Daten für die Sollprofile angegeben werden.

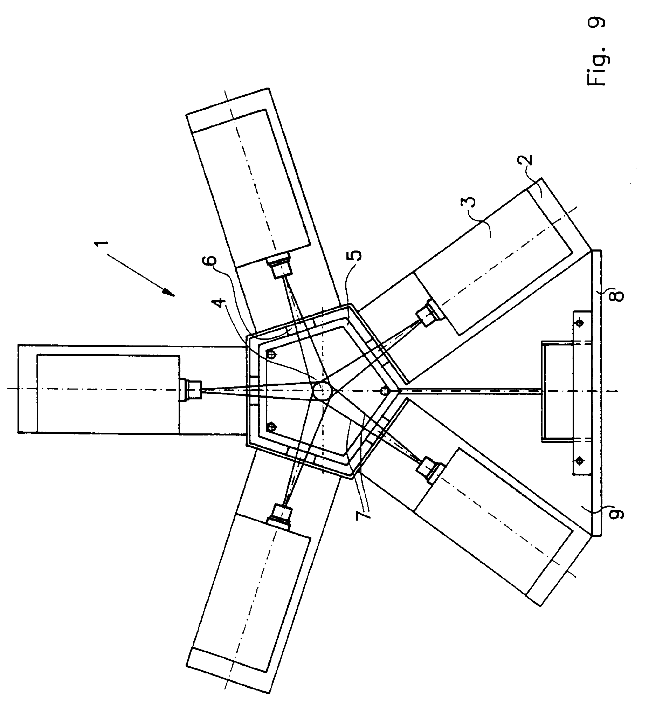

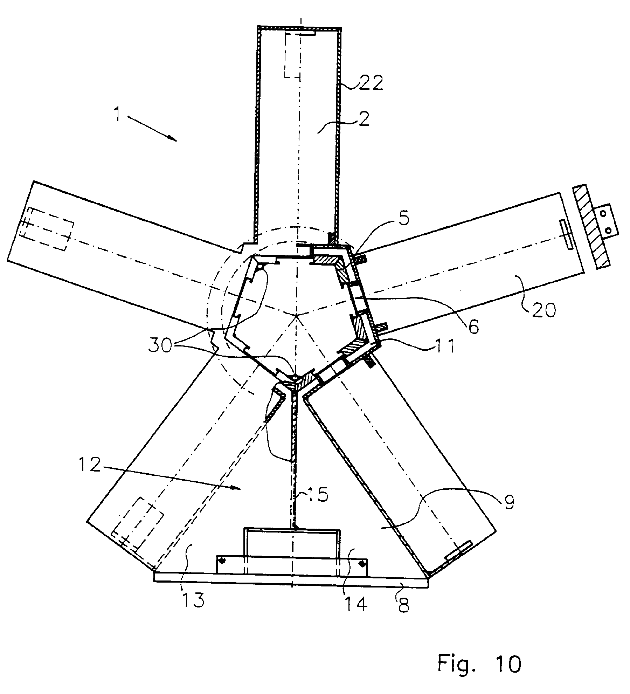

Ein Beispiel einer erfindungsgemäßen Meßeinrichtung, allgemein mit 1 bezeichnet, ist der Darstellung von Figur 9 zu entnehmen, zu der weitere Einzelheiten vor allem aus den Figuren 10 bis 13 zu entnehmen sind. Aus der Gesamtdarstellung in Figur 9 ist ersichtlich, daß fünf Sondenträger 2 mit gleichem Winkelabstand sternförmig zur Aufnahme jeweils einer Sonde 3 zur Messung eines Rundprofils 4 in einer Meßkammer 5 angeordnet sind. Durch Fenster 6 zwischen den Sondenträgern 2 und der Meßkammer 5 haben die mit 7 bezeichneten Meßstrahlen der Sonden 3 Zugang zu der Kontur des zu vermessenden Rundprofils 4. Der Sondenträgerstern ist in ein Gehäuse 9 integriert, das auf einer Grundplatte 8 ruht.

Die Anordnung ist so ausgelegt, daß sich ein ausreichender Überlappungsbereich der einzelnen Sonden-Abtastbereiche ergibt. Der Überlappungsbereich ergibt sich aus den maximal zulässigen Reflektionswinkeln.

Die Sonden 3 sind in dem gewählten Ausführungsbeispiel so angeordnet, daß sie mit ihrem zulässigen Scannbereich ein Meßfeld der Größe 40 x 40 mm aufspannen. Die verwendeten Triangulationssonden 3 besitzen jeweils für sich einen Meßbereich von 70 mm und einen Tiefenmeßbereich von 30 mm. Die schnellste Abtastzeit, die sich aus der Positionierung und der Belichtung der CCD-Zeile ergibt, beträgt 2 ms.

Aus Figur 10 ergibt sich, daß das Gehäuse 9 eine allgemein mit 12 bezeichnete Wasserkammer abschließt, die in zwei Hälften 13, 14 durch eine Trennwand 15 unterteilt ist. Die Meßkammer 5 ist, wie im einzelnen Figur 10 zu entnehmen ist, zur Bildung eines Ringkanals 11 doppelwandig ausgeführt. Der Ringkanal dient zum Hindurchführen von Kühlmitteln wie insbesondere von Kühlwasser und weist die aus der Zeichnung ersichtliche Verbindung zu den Wasserkammerhälften 13, 14 auf. Das in die erste Wasserkammerhälfte 13 einströmende Kühlwasser wird im Kreislauf, wie durch eingezeichnete Pfeile veranschaulicht ist, durch den Ringkanal 11 hindurch und schließlich in die zweite Wasserkammerhälfte 14 zurückgeführt, um von dort wieder aufbereitet der ersten Wasserkammerhälfte 13 zugeführt zu werden. Auf diese Weise wird die Meßkammer 5 wirksam gekühlt bzw. temperiert.

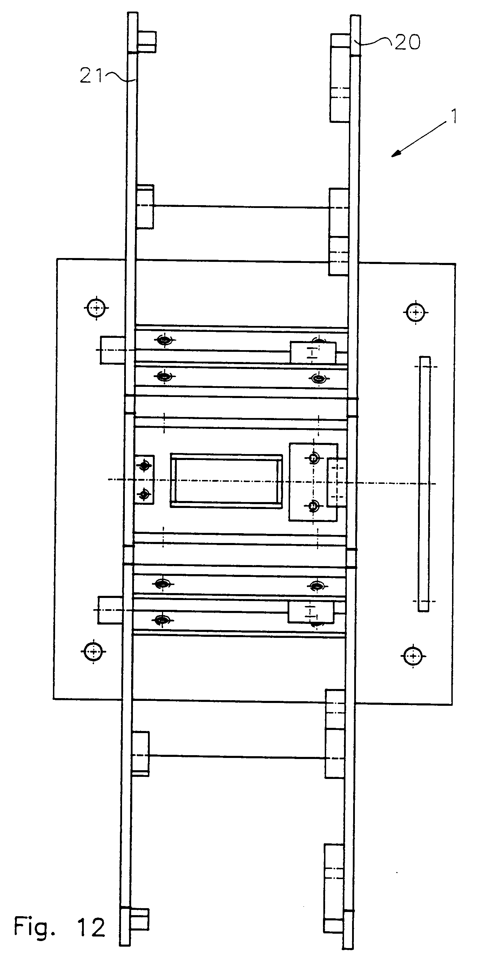

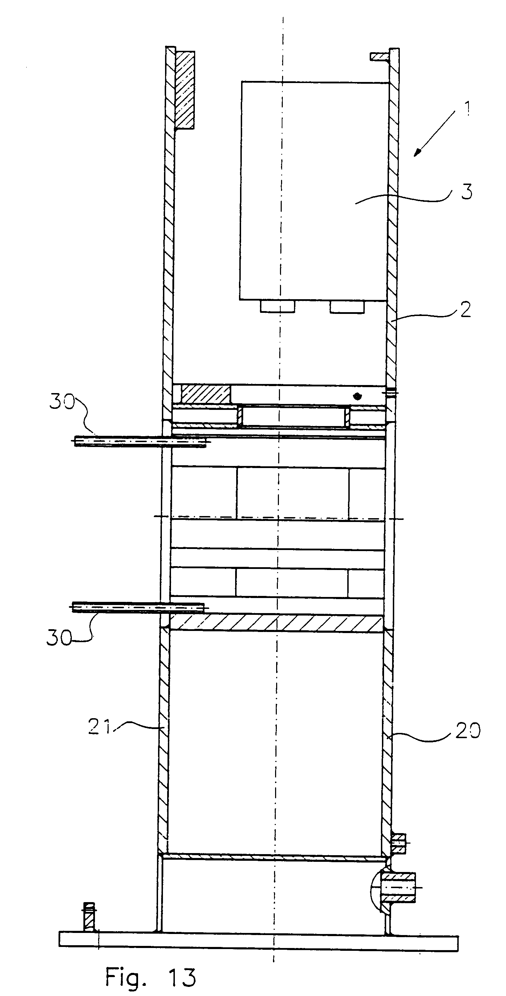

Im vorliegenden Ausführungsbeispiel ist die sternförmige Sondenträgeranordnung gebildet aus zwei im Abstand voneinander angeordneten Platten 20, 21, von denen die Sondenträger 2 als Arme ausgehen, während im gemeinsamen Innenbereich die Meßkammer 5 angeordnet ist. Wie insbesondere Figur 12 erkennen läßt, sind die beiden Platten 20, 21 durch die Wände der Meßkammer 5 starr miteinander verbunden. Die Sondenträger 2 bestehen somit aus zwei in entsprechendem Abstand einander gegenüberliegenden Armen der Platten 20, 21 (vgl. Figur 12, 13). Diese Wände des Sondenträgers 2 bilden jeweils mit einer Haube 22 eine geschlossene Sondenkammer, wobei jede Haube 22 aus zwei Gehäusehälften besteht, wie Figur 10 zeigt.

In der teilweise geschnittenen Seitenansicht von Figur 13 ist rein schematisch eine der Sonden 3 angedeutet, die an dem Sondenträger 2, gebildet durch den betreffenden Arm der Platte 20, angeschraubt wird.

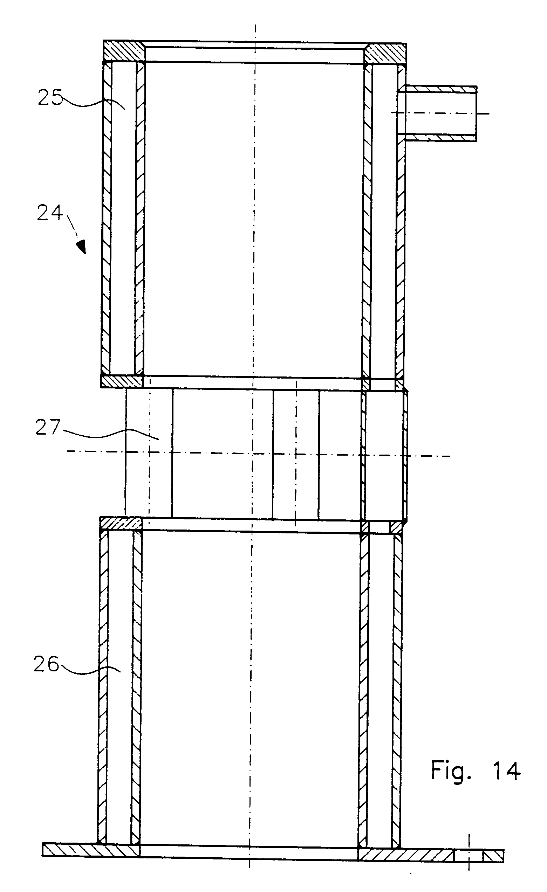

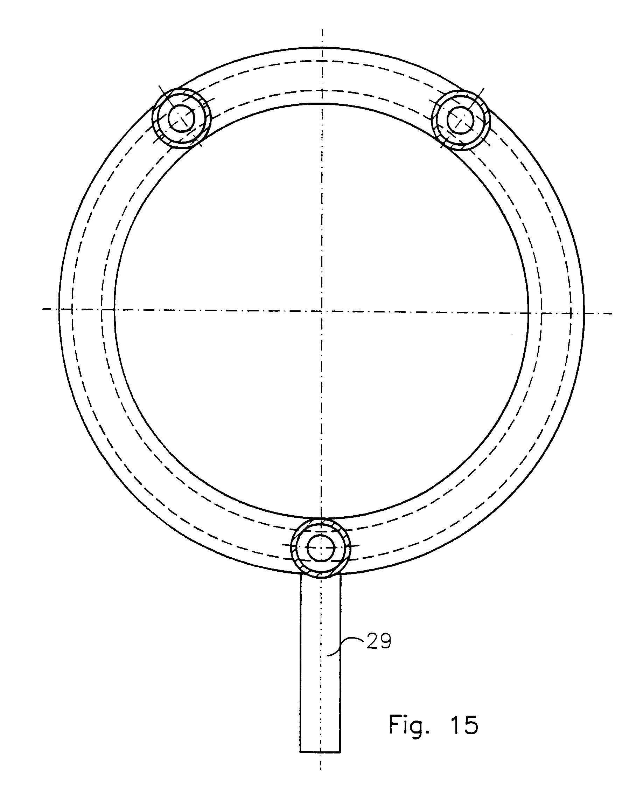

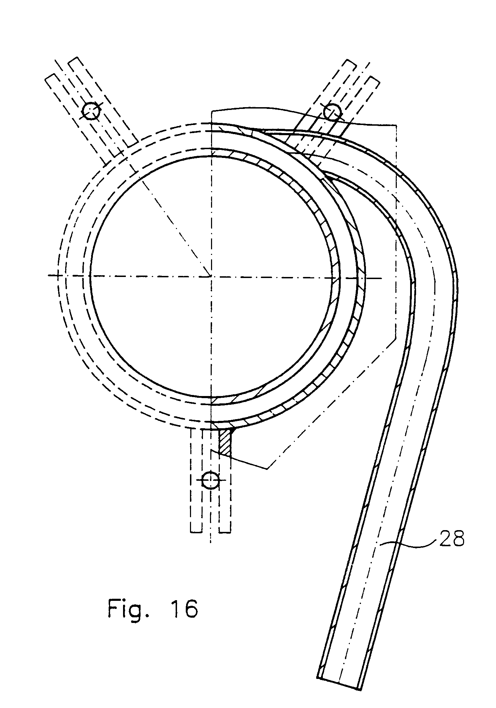

Figur 14, 15 und 16 zeigen einen Ringeinsatz 24, der doppelwandig ausgeführt ist und ebenfalls zur Kühlung der Meßkammer 5 dient. Der Ringeinsatz 24 besteht aus zwei Ringkammern 25, 26, die über Verbindungsrohre, im vorliegenden Fall drei Verbindungsrohre 27 verbunden sind. Durch ein Einlaßrohr 28 wird der Ringkammer 25 Kühlwasser zugeführt, aus der es über einen Auslaß 29 (Figur 15) wieder austritt. Der Ringeinsatz 24 wird in die Meßkammer 5 eingeschoben und über Gewindestangen 30 (Figur 13) positioniert und befestigt.

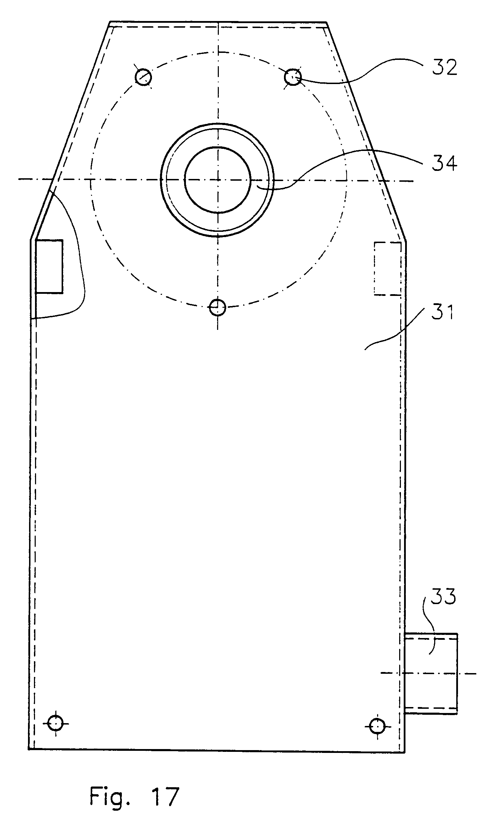

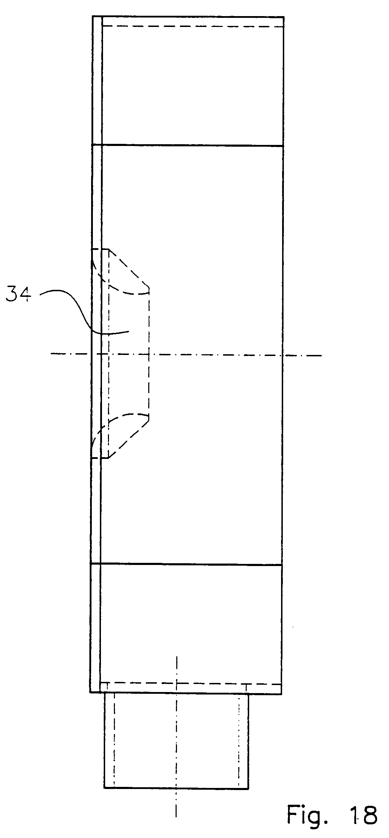

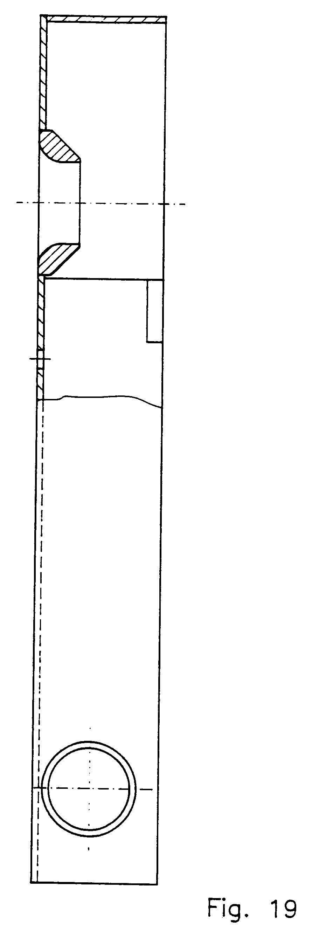

Figur 17 - 19 zeigen eine ebenfalls mittels der Gewindestangen 30 an das Gehäuse 9 der Meßeinrichtung anschließbare Abdeckhaube 31, die für den Durchgang der Gewindestangen 30 entsprechende Bohrungen 32 aufweist. Über einen Einlaß 33 (vgl. Figur 17) wird Kühlluft zugeführt und unter der Abdeckhaube 31 zu der Meßkammer 5 geleitet. Mit 34 ist eine mögliche Zwangsführung für das zu messende Profil bezeichnet. Auf jeden Fall befindet sich hier die Öffnung für die Zuführung des in der Meßkammer 5 zu vermessenden Profils.

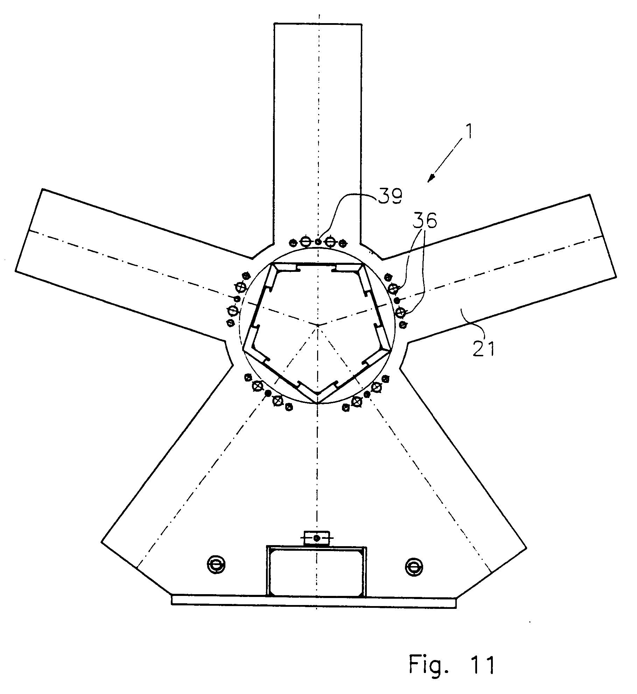

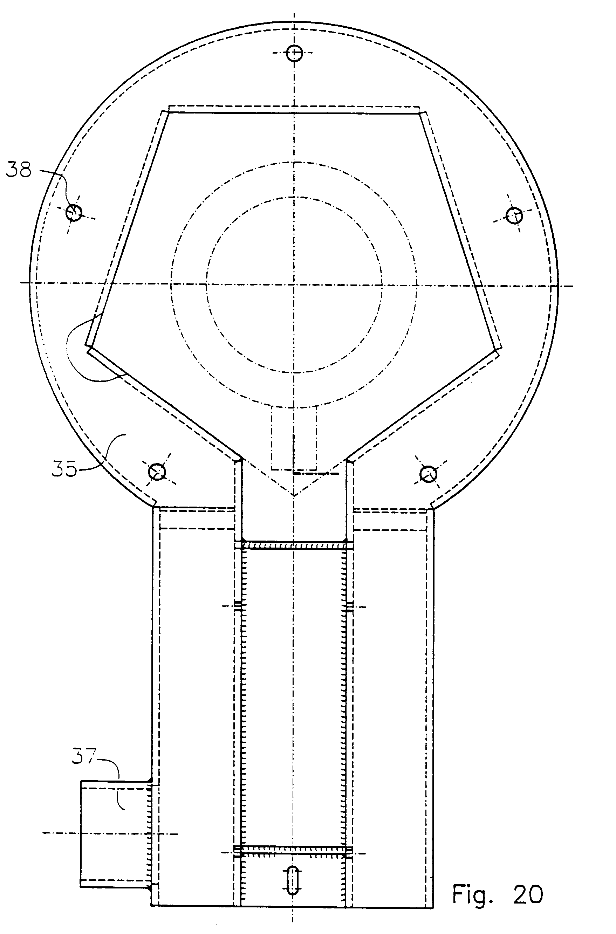

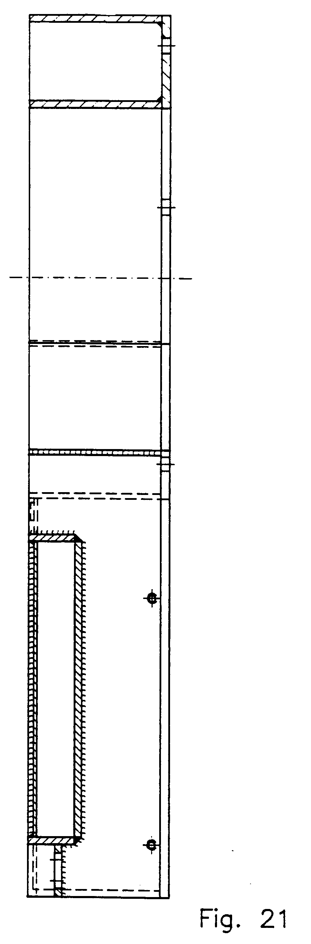

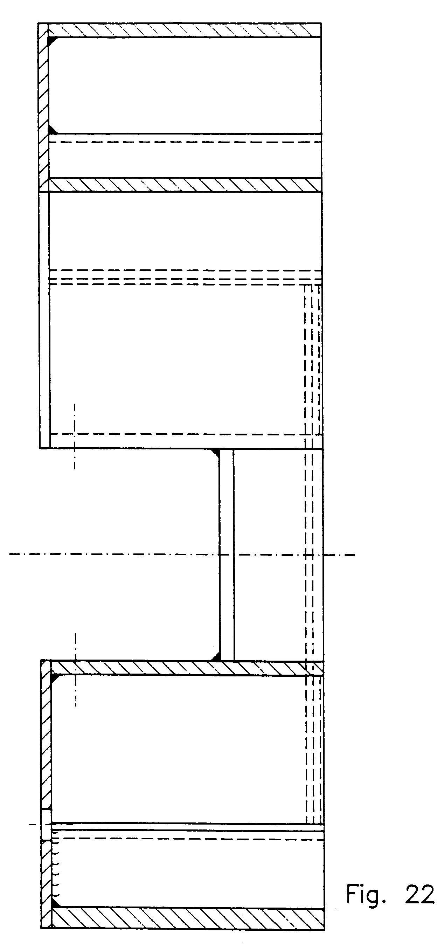

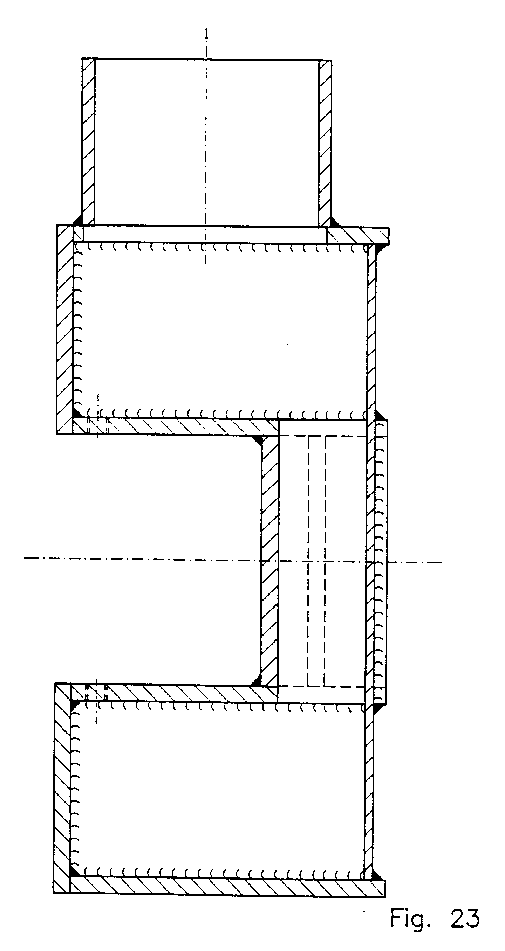

Figur 20, 21, 22, 23 zeigt ein Gehäuse 35 eines Belüftungssystems, mit dem den Sondenkammern über Öffnungen 36 (vgl. Figur 11) klimatisierte bzw. in vorgegebener Weise temperierte Luft zugeführt werden kann. Die Zuführung erfolgt über den Einlaß 37, von dort steigt die Kühlluft in dem zwischen der Platte 21 und dem Gehäuse 35 gebildeten Kanal nach oben, um von dort über die Öffnungen 36 in die Sondenkammern überzutreten. Die Öffnungen 38 dienen zum Hindurchführen von nicht dargestellten Befestigungsschrauben, die in entsprechende Gewindebohrungen 39 im sog. Nabenbereich der Platte 21 einschraubbar sind (vgl. Figur 11).

**Patentansprüche**

1.  Verfahren zum kontinuierlichen berührungsfreien Messen von Profilen (4), insbesondere von sich in axialer Richtung bewegenden Profilen (4), dadurch **gekennzeichnet**, daß Sonden (3), mit denen nach dem Triangulationsprinzip mittels eines Laserlicht-Meßstrahls (7) ein Oberflächensegment eines Objektes in einem bestimmten Meßbereich der jeweiligen Sonde (3) sequentiell bzw. punktweise nacheinander sowie mit variabler und voreinstellbarer Schrittweite bzw. Auflösung innerhalb des Meßbereichs kontinuierlich abgetastet wird und mit dem von der Objektoberfläche reflektierten und von einem feststehenden Empfänger aufgenommenen Strahl (7) aufgrund der geometrischen Beziehungen der Abstand jedes Meßpunktes zur Sonde (3) in Form lokaler Meßdaten bestimmt wird, in einer Halterung rings um das Profil sowie im Abstand von diesem und derart in vorbestimmten Winkellagen zueinander angeordnet werden, daß dem Meßbereich jeder Sonde (3) als Oberflächensegment ein Konturensegment des Profils (4) zugeordnet wird, wobei sich die Meßbereiche benachbarter Sonden (3) überlappen und die zu messende Gesamtkontur des Profils (4) durch die Meßbereiche erfaßt wird, und daß eine Systemkalibrierung mit einem konturen- und maßgenauen Referenzwerkstück durch Ermittlung der Sondenpositionen in einem Referenzkoordinatensystem vorgenommen wird und daß mit den Daten der Systemkalibrierung, den vorgegebenen Solldaten des Profils (4) und den lokalen Meßdaten, die sich als Schnittpunkt des Meßstrahls (7) mit dem Objekt ergeben, sowie mit einer Lageberechnung für das zu messende Profil (4) und über Koordinatentransformationen die Konturensegmente in ein globales Koordinatensystem übertragen und zu einem Gesamtbild zusammengefügt werden.

2.  Verfahren nach Anspruch 1, dadurch **gekennzeichnet**, daß die Meßstrahlen (7) der Sonden (3) in in Achsrichtung des Profils (4) parallel versetzten Ebenen auf das Profil (4) gerichtet und reflektiert werden.

3.  Verfahren nach Anspruch 1 oder 2, dadurch **gekennzeichnet**, daß die Sonden (3) in gleich großen Winkelschritten symmetrisch um das Profil (4) angeordnet werden.

4.  Verfahren nach einem oder mehreren der Ansprüche 1 - 3, dadurch **gekennzeichnet**, daß das Profil (4) insbesondere vor, ggfs. aber auch hinter der Meßebene zwangsgeführt wird.

5.  Verfahren nach einem oder mehreren der Ansprüche 1 - 4, dadurch **gekennzeichnet**, daß die Auswertung der lokalen Meßdaten mit einer Hardware, die Link Adapter, Transputereinheiten und eine Transputer-Graphik umfaßt, in Parallelrechentechnik erfolgt, wobei die verwendeten Softwaremodule eine Profilbeschreibungsdatei, ein Referenzlagemodul sowie Kalibriermodule und Scannerdaten umfassen.

6.  Einrichtung zum Messen von Profilen, zur Durchführung eines Verfahrens nach einem oder mehreren der vorstehenden Ansprüche, dadurch **gekennzeichnet**, daß in einer Meßeinrichtung (1) mehrere Sonden (3) sternförmig mit vorgewählter Winkellage zueinander um eine Meßkammer (5) angeordnet sind und ihre Meßstrahlen (7) im wesentlichen nach innen auf die Meßkammer (5) richtbar sind, durch die das zu messende Profil (4) axial hindurchbewegbar ist, wobei die nach dem Triangulationsprinzip arbeitenden Sonden jeweils einen Laser aufweisen, dessen emittierter Meßstrahl (7) ein Oberflächensegment des Objekts derart sequenziell bzw. punktweise nacheinander abtastet, daß der reflektierte Meßstrahl (7) auf einen feststehenden Empfänger abgebildet wird.

7. Einrichtung nach Anspruch 6, dadurch **gekennzeichnet**, daß jede Sonde (3) einem Sondenträger (2) zugeordnet und an diesem einstellbar zu befestigen ist und die Sondenträger (2) an der innenliegenden Meßkammer (5) befestigt sind.

8. Einrichtung nach Anspruch 6 oder 7, **gekennzeichnet** durch abnehmbare Hauben (22), die mit bzw. an den Sondenträgern (2) im wesentlichen geschlossene Sondenkammern bilden.

9. Einrichtung nach einem oder mehreren der Ansprüche 6 - 8, dadurch **gekennzeichnet**, daß die Meßkammer (5) gegenüber den Sondenträgern (2) durch eine ringsum laufende Wandung mit Meßfenstern (6) abgeteilt ist.

10. Einrichtung nach einem oder mehreren der Ansprüche 6 - 9, dadurch **gekennzeichnet**, daß die Meßkammer (5) zur Bildung eines Ringkanals (11) zum Hindurchführen strömungsfähiger Medien wie Kühlmitteln doppelwandig ausgeführt ist.

11. Einrichtung nach einem oder mehreren der Ansprüche 6 - 10, dadurch **gekennzeichnet**, daß unterhalb bzw. neben der Meßkammer (5) zwischen zwei Sondenträgern (2) eine Wasserkammer (12) mit Anschlüssen angeordnet ist, von der aus dem Ringkanal (11) der Meßkammer (5) Kühlwasser im Kreislauf zugeführt wird.

12. Einrichtung nach einem oder mehreren der Ansprüche 6 - 11, dadurch **gekennzeichnet**, daß ein Ringeinsatz (24), der aus zwei im Meßbereich durch außerhalb der Meßstrahlen (7) verlaufen-de Verbindungsrohre (27) miteinander verbunde-nen Ringkammern (25) zur Hindurchführung strömungsfähiger Medien wie Kühlwasser gebildet ist, im wesentlichen koaxial in die Meßkammer (5) einführbar und dort befestigbar sowie mit Anschlüssen für die Zu- und Abführung von Strömungsmedien versehen ist.

13. Einrichtung nach einem oder mehreren der Ansprüche 6 - 12, dadurch **gekennzeichnet**, daß die Sondenkammern an ein Belüftungssystem anschließbar sind, mit dem den Sondenkammern klimatisierte bzw. in vorgegebener Weise temperierte Luft zugeführt werden kann.

14. Einrichtung nach Anspruch 13, dadurch **gekennzeichnet**, daß zur Schaffung eines Belüftungssystems ein Gehäuse (35) an die Einrichtung ansetzbar ist, das mit der die Meßkammer (5) auf einer Stirnseite abschließenden bzw. umgebenden Stirnwand einen ringförmigen Luftkanal bildet, der über Einlaßöffnungen (36) mit den Sondenkammern verbunden ist.

15. Einrichtung nach einem oder mehreren der Ansprüche 6 - 14, dadurch **gekennzeichnet**, daß insbesondere auf der dem Belüftungssystem abgewandten Seite der Einrichtung eine Abdeckung befestigbar ist.

16. Einrichtung nach einem oder mehreren der Ansprüche 6 - 15, dadurch **gekennzeichnet**, daß die sternförmige Anordnung der Sondenträger (2) aus zwei im Abstand voneinander angeordneten und im wesentlichen jeweils einen nabenförmigen Mittelteil und hiervon sternförmig ausgehende Arme umfassenden Platten (20, 21) gebildet ist, die mindestens mittig durch axiale Stege bzw. durch die Meßkammerwände starr miteinander verbunden sind.

## Claims

1. Process for continuous contactless measurement of profiles (4), in particular profiles (4) moving in the axial direction, **characterized** in that probes (3), by means of which a surface segment of an object is continuously scanned in accordance with the triangulation principle by means of a laser light measurement beam (7) in a particular measurement region of the respective probe (3) sequentially or by points one after the other and with a variable and pre-settable step size or resolution within the measurement region, and using the beam (7) reflected by the object surface and received by a fixed receiver on the basis of the geometrical relationships the spacing of each measured point from the probe (3) is determined in the form of local measured data, are arranged in a mounting all around the profile and spaced therefrom and are arranged in predetermined angular positions with respect to one another such that a contour segment of the profile (4) is associated with the measurement region of each probe (3) as a surface segment, the measurement regions of adjacent probes (3) overlapping one another and the overall contour which is to measured, of the profile (4), being determined by the measurement regions, and in that a system calibration using a reference workpiece with precise contours and dimensions is carried out by determining the probe positions in a reference coordinate system, and in that, using the data of the system calibration, the predetermined set data of the profile (4) and the local measured data resulting as the point of intersection of the measurement beam (7) with the object, and using a position calculation for the profile (4) to be measured and by way of coordinate transformations, the contour segments are transferred to a global coordinate system and grouped together to form an overall image.

2. Process according to claim 1, **characterized** in that the measurement beams (7) of the probes (3) are directed towards the profile (4) and reflected in planes offset parallel in the axial direction of the profile (4).

3. Process according to claim 1 or 2, **characterized** in that the probes (3) are arranged symmetrically around the profile (4) in angular steps of the same size.

4. Process according to one or more of claims 1 - 3, **characterized** in that the profile (4) is guided restrictedly in particular in front of but where appropriate also behind the measurement plane.

5. Process according to one or more of claims 1 - 4, **characterized** in that the local measured data are evaluated by the parallel processing technique using a hardware comprising link adapters, transputer units and transputer graphics, the software modules used comprising a profile description file, a reference position module and calibration modules and scanner data.

6. Apparatus for the measurement of profiles for carrying out a process according to one or more of the preceding claims, **characterized** in that a plurality of probes (3) are arranged around a measurement chamber (5) in a measurement apparatus (1) in the shape of a star with a preselected angular position with respect to one another, and their measurement beams (7) may be directed substantially inwards towards the measurement chamber (5), through which the profile (4) to be measured may be moved axially, whereby the probes working in accordance with the triangulation principle provide a laser emitting a measurement beam (7) which scans sequentially or by points one after the other the surface segment of an object in such a way that the reflected measurement beam (7) is shown on a fixed receiver.

7. Apparatus according to claim 6, **characterized** in that each probe (3) is associated with a probe carrier (2) and is to be secured adjustably thereto, and the probe carriers (2) are secured to the internal measurement chamber (5).

8. Apparatus according to claim 6 or 7, **character-**

**ized** by removable hoods (22) which form substantially closed probe chambers with or on the probe carriers (2).

9. Apparatus according to one or more of claims 6 - 8, **characterized** in that the measurement chamber (5) is divided off from the probe carriers (2) by a wall running all the way around and having measurement windows (6).

10. Apparatus according to one or more of claims 6 - 9, **characterized** in that the measurement chamber (5) is of double-walled construction to form an annular channel (11) for guiding through media capable of flow, such as coolants.

11. Apparatus according to one or more of claims 6 - 10, **characterized** in that a water chamber (12) having connections is arranged below or next to the measurement chamber (5) between two probe carriers (2) and from this cooling water is supplied in a cycle to the annular channel (11) of the measurement chamber (5).

12. Apparatus according to one or more of claims 6 - 11, **characterized** in that an annular insert (24) which is formed from two annular chambers (25) connected to one another in the measurement region by connection pipes (27) running outside the measurement beams (7) to guide through media capable of flow, such as cooling water, may be inserted substantially coaxially into the measurement chamber (5) and may be secured there and is provided with connections for the supply and removal of flow media.

13. Apparatus according to one or more of claims 6 - 12, **characterized** in that the probe chambers can be connected to an aeration system by means of which air which has been conditioned or temperature-controlled in a predetermined way can be supplied to the probe chambers.

14. Apparatus according to claim 13, **characterized** in that, to provide an aeration system, a housing (35) may be placed on the apparatus and forms with the end wall terminating or surrounding the measurement chamber (5) at one end side an annular air channel which is connected by way of inlet openings (36) to the probe chambers.

15. Apparatus according to one or more of claims 6 - 14, **characterized** in that a covering may be secured in particular on the side of the apparatus remote from the aeration system.

16. Apparatus according to one or more of claims 6 - 15, **characterized** in that the star-shaped arrangement of the probe carriers (2) is formed from two plates (20, 21) which are arranged spaced from one another and comprise substantially in each case a hub-shaped central part and arms extending in a star shape therefrom, and these plates are rigidly connected to one another at least centrally by axial webs or by the measurement chamber walls.

**Revendications**

1. Procédé pour la mesure continue sans contact de profilés (4), en particulier de profilés qui se déplacent dans le sens axial, **caracterisé en ce** que des sondes (3), avec lesquelles un segment de surface d'un objet est exploré de manière continue, selon le principe de la triangulation au moyen d'un faisceau de mesure à lumière laser (7), dans un certain champ de mesure de la sonde respective (3) de manière séquentielle ou encore ponctuelle l'une après l'autre ainsi qu'avec une largeur de pas ou encore une résolution variable et préréglable à l'intérieur du champ de mesure et avec lequel la distance de chaque point de mesure par rapport à la sonde (3) est déterminée en raison des relations de géométrie sous forme de données de mesure locales avec le faisceau (7) réfléchi par la surface de l'objet et absorbé par un récepteur fixe, sont placées dans un support autour du profilé ainsi qu'à une certaine distance de celui-ci et dans des positions angulaires prédéfinies les unes par rapport aux autres de telle manière qu'un segment de contour du profilé (4) est affecté au champ de mesure de chaque sonde (3) comme segment de surface, les champs de mesure de sondes voisines (3) se chevauchant et l'ensemble des contours du profilé (4) à mesurer étant compris par les champs de mesure et qu'un calibrage de système est effectué avec une pièce à travailler de référence aux contours et aux dimensions exactes par détermination des positions des sondes dans un système de coordonnées de référence et que les segments de contour sont transmis dans un système global de coordonnées avec les données du calibrage de système, les données nominales prédéfinies du profilé (4) et les données de mesure locales qui résultent comme point d'intersection du faisceau de mesure (7) et de l'objet ainsi qu'avec un calcul de position pour le profilé à mesurer (4) et par des transformations de coordonnées et sont assemblés en une image d'ensemble.

2. Procédé selon la revendication 1, **caractérisé en ce que** les faisceaux de mesure (7) des sondes (3) sont dirigés et réfléchis sur le profilé (4) dans des plans décalés parallèlement dans le sens de l'axe du profilé (4).

3. Procédé selon la revendication 1 ou 2, **caractérisé en ce que** les sondes (3) sont placées symétriquement autour du profilé (4) à des pas angulaires de même grandeur.

4. Procédé selon l'une ou plusieurs des revendications 1 à 3, **caractérisé en ce que** le profilé (4) est à guidage forcé en particulier devant, mais le cas échéant également derrière le plan de mesure.

5. Procédé selon l'une ou plusieurs des revendications 1 à 4, **caractérisé en ce que** l'exploitation des données locales de mesure se fait en calcul parallèle avec un matériel, qui comprend des adaptateurs de liaison, des unités de transordinateurs et un matériel graphique pour transordinateurs, les modules de logiciel utilisés comprenant un fichier de description de profil, un module de position de référence ainsi que des modules de calibrage et des données de scanner.

6. Dispositif pour mesurer des profilés, pour exécuter un procédé selon l'une ou plusieurs des revendications précédentes, **caractérisé en ce que** plusieurs sondes (3) sont disposées dans un dispositif de mesure (1) en forme d'étoile autour d'une chambre de mesure (5) avec une position angulaire présélectionnée l'une par rapport à l'autre et que leurs faisceaux de mesure (7) peuvent être dirigés substantiellement vers l'intérieur sur la chambre de mesure (5) à travers laquelle le profilé à mesurer (4) peut se déplacer axialement pour la traverser, les sondes qui fonctionnent selon le principe de la triangulation présentant respectivement un laser dont le faisceau de mesure émis (7) balaye un segment de surface de l'objet de manière séquentielle ou encore ponctuelle l'une après l'autre de telle manière que le faisceau de mesure réfléchi (7) est reproduit sur un récepteur fixe.

7. Dispositif selon la revendication 6, **caractérisé en ce que** chaque sonde (3) est affectée à un support de sonde (2) et doit être fixée à celui-ci en étant réglable et les supports de sondes (2) sont fixés à la chambre de mesure (5) située à l'intérieur.

8. Dispositif selon la revendication 6 ou 7, **caractérisé** par des calottes amovibles (22) qui forment avec ou encore sur les supports de sondes (2) des compartiments pour sondes substantiellement fermés.

9. Dispositif selon l'une ou plusieurs des revendications 6 à 8, **caractérisé en ce que** la chambre de mesure (5) en face des supports de sondes (2) est divisée par une paroi périmétrique avec des fenêtres de mesure (6).

10. Dispositif selon l'une ou plusieurs des revendications 6 à 9, **caractérisé en ce que** la chambre de mesure (5) est réalisée à double paroi pour former un canal de ceinture (11) pour faire traverser des milieux capables de s'écouler comme des agents réfrigérants.

11. Dispositif selon l'une ou plusieurs des revendications 6 à 10, **caractérisé en ce** qu'une chambre à eau (12) avec des raccords est placée au-dessous ou à côté de la chambre de mesure (5) entre deux supports de sondes (2), chambre à partir de laquelle de l'eau de refroidissement provenant du canal de ceinture (11) est amenée à la chambre de mesure (5).

12. Dispositif selon l'une ou plusieurs des revendications 6 à 11, **caractérisé en ce** qu'un insert annulaire (24), qui est formé par deux chambres annulaires (25) reliées l'une à l'autre dans le champ de mesure par des tuyaux de jonction (27) situés à l'extérieur des faisceaux de mesure (7) pour faire traverser des milieux capables de s'écouler comme de l'eau de refroidissement, peut être introduit dans la chambre de mesure (5) de manière substantiellement coaxiale, peut y être fixé et est pourvu de raccords pour l'amenée et l'évacuation des milieux qui s'écoulent.

13. Dispositif selon l'une ou plusieurs des revendications 6 à 12, **caractérisé en ce que** les compartiments pour sondes peuvent être raccordés à un système d'aération avec lequel de l'air climatisé ou encore tempéré de manière prédéfinie peut être amené aux compartiments pour sondes.

14. Dispositif selon la revendication 13, **caractérisé en ce que** pour créer un système d'aération un bâti (35) peut être rattaché au dispositif, bâti qui forme un canal d'air annulaire avec la paroi frontale qui entoure ou qui termine la chambre de mesure (5) sur une face frontale, canal d'air qui est relié par des orifices d'entrée (36) aux compartiments pour sondes.

15. Dispositif selon l'une ou plusieurs des revendications 6 à 14, **caractérisé en ce** qu'un recouvrement peut être fixé en particulier sur le côté du dispositif qui est détourné du système d'aération.

16. Dispositif selon l'une ou plusieurs des revendications 6 à 15, **caractérisé en ce que** le dispositif en forme d'étoile des supports de sondes (2) est formé par deux plaques (20, 21) placées à une certaine distance l'une de l'autre, qui entourent essentiellement respectivement une partie centrale en forme de moyeu et des bras qui partent de là en forme d'étoile, ces plaques étant reliées l'une à l'autre de manière rigide au moins au milieu par des traverses axiales ou par les parois de la chambre de mesure.

Fig. 1

Fig. 2

Fig. 3

Fig. 4

Fig. 5

Softwaremodule

Profilbeschreibungsdatei

Hardware

Link
Adapter

Referenzlagemodul

Mechanik

Transputerboard

Sensorik

Transputer-
Graphik

Kalibriermodul

Scannerdaten

— Sondenaufnahme
— Kühlsystem (Temperierung,
 Wasserkreislauf,Gebläse)

Fig. 6

Fig. 7

EP 0 511 356 B1

## Software—Module für die Profilvermessung

Fig. 8

Fig. 9

Fig. 10

Fig. 11

Fig. 12

Fig. 13

25

24

27

26

Fig. 14

29

Fig. 15

Fig. 16

28

Fig. 17

34

Fig. 18

Fig. 19

38

35

37

Fig. 20

Fig. 21

Fig. 22

Fig. 23